# EUROPÄISCHE PATENTSCHRIFT

(11) **EP 1 044 857 B1**
(45) Veröffentlichungstag und Bekanntmachung des Hinweises auf die Patenterteilung: **08.02.2006**
(21) Anmeldenummer: 00103674.8
(22) Anmeldetag: 22.02.2000
(51) Int. Cl.: B60R 25/02, B60R 25/04

(54) **Elektronische Zündstartschalter- und Lenkradverriegelungsvorrichtung**
Electronic ignition switch and steering lock device
Dispositif électronique de commutateur d'allumage et verrou de direction

(30) Priorität: 15.04.1999 DE 19916966
(43) Veröffentlichungstag der Anmeldung: 18.10.2000
(73) Patentinhaber: DaimlerChrysler AG, 70567 Stuttgart (DE)
(72) Erfinder: Geber, Michael, 72574 Bad Urach (DE); Mazzini, Adrian, 88284 Wolpertswende (DE); Ohle, Jörn-Marten, 71229 Leonberg (DE)

(56) Entgegenhaltungen:
- EP-A- 0 733 526
- WO-A-99/14085
- DE-A- 4 447 165
- DE-A- 19 642 616
- DE-A- 19 733 404
- DE-C- 19 653 860
- DE-C- 19 741 438
- FR-A- 2 592 347
- US-A- 5 677 663
- US-A- 5 841 363

## Beschreibung

Die Erfindung bezieht sich auf eine elektronische Zündstartschalter- und Lenkradverriegelungsvorrichtung für ein Kraftfahrzeug nach dem Oberbegriff des Anspruchs 1. Derartige Vorrichtungen sind insbesondere in Automobilen gebräuchlich. Die Lenkradverriegelung erfüllt eine Wegfahrsperrfunktion, indem sie das Lenkrad oder ein äquivalentes Bedienelement zur Fahrzeugquerdynamiksteuerung, nachfolgend Fahrzeuglenkelement genannt, verriegelt hält, solange sich der Fahrzeugnutzer nicht über ein entsprechendes Authentikationsmittel, z.B. einen mechanischen oder elektronischen Schlüssel, als fahrberechtigt ausgewiesen hat. Die Lenkradverriegelungseinheit ist über entsprechende Kopplungsmittel mit der Zündstartschaltereinheit dergestalt gekoppelt, daß sichergestellt ist, daß sich beim Starten des Motors die Lenkradverriegelungseinheit in ihrem entriegelnden Zustand befindet.

Bei einer Vorrichtung der eingangs genannten Art, wie sie in Fahrzeugen der Anmelderin zu finden ist, ist die Zündstartschaltereinheit durch ein mechanisches Zündschlüssel-Zündschloß-System gebildet, bei dem das Zündschloß durch einen fahrberechtigenden Schlüssel betätigt werden kann. Dabei kann das Zündschloß bekanntermaßen zwischen vier Stellungen verdreht werden, nämlich einer "0"-Stellung, in welcher der Schlüssel ein- und ausgesteckt werden kann und die Zündung sowie die Bordnetzversorgung abgeschaltet sind, einer "15R"-Stellung, in der die Bordnetzversorgung bei noch ausgeschalteter Zündung aktiviert ist, einer "15"-Stellung, in der die Zündung eingeschaltet ist und in der sich das Zündschloß im normalen Fahrbetrieb befindet, sowie einer "50"-Stellung, in die das Zündschloß kurzzeitig zum Starten des Motors gedreht wird. Die Zahlenbezeichnungen dieser Zündschloßstellungen leiten sich aus den Bezeichnungen für die betreffenden standardisierten Klemmen ab, deren Stromkreis vom Zündschloß in der jeweiligen Stellung geschlossen wird. Die Lenkradverriegelungseinheit umfaßt eine Verriegelungs-Steuereinheit und eine von dieser angesteuerte Stelleinheit und wird über eine Versorgungsleitung gespeist. Die Lenkradradverriegelungseinheit befindet sich bei fehlender Leistungszufuhr im entriegelnden Zustand und kann durch Zuführen der nötigen Betriebsleistung in ihren verriegelnden Zustand gebracht werden. Die Versorgungsleitung ist über das drehbare Zündschloß geführt, das als eingeschleiftes, mechanisches Schaltelement fungiert. Dabei hält es die Versorgungsleitung geschlossen, solange es nach einer erfolgreichen Schlüsselauthentikation noch nicht um mehr als einen vorgebbaren Schwellwert-Winkel aus seiner Ausgangsstellung, d.h. der "0"-Stellung, herausgedreht wurde, so daß sich die Lenkradverriegelungseinheit solange in ihrem verriegelnden Zustand befinden kann. Wenn das Zündschloß den vorgegebenen Schwellwert-Winkel überschritten hat, unterbricht es die Versorgungsleitung, wodurch sichergestellt wird, daß sich die Lenkradverriegelungseinheit beim anschließenden Starten des Fahrzeugmotors in ihrem entriegelnden Zustand befindet.

Aus der Patentschrift DE 196 34 627 C1 ist eine Ankopplung einer Lenkradverriegelungseinheit an eine elektronische Wegfahrsperre beschrieben, bei der die Lenkradverriegelungseinheit einen Riegel als Stellelement aufweist, dessen Bewegung zwischen einer Entriegelungs- und einer Verriegelungsposition mittels einer Sperreinrichtung blockiert wird, wenn die elektronische Wegfahrsperre geschärft ist. Beim Entschärfen der elektronischen Wegfahrsperre gibt die Sperreinrichtung den Riegel frei, der daraufhin in seine Entriegelungsposition bewegbar ist, z.B. durch den Kopf eines Fahrzeugschlüssels, durch einen separaten Transponder oder einen Bowdenzug. Alternativ kann das Betätigen des Riegels durch Drehen eines in ein Zündschloss eingesteckten Zündschlüssels erfolgen, wie dies aus den in der DE 196 34 627 C1 zitierten Offenlegungsschriften DE 44 34 587 A1 und DE 44 46 613 A1 bekannt ist.

Auch die DE 44 47 165 A1 beschreibt eine Schaltvorrichtung für Schliesssysteme nach dem Oberbegriff des Anspruchs 1, wobei zur Zündung des Kraftfahrzeugmotors der Controller den Elektromotor derart ansteuert, dass die Schaltnockenwelle in eine Stellung gefahren wird, in der der Schaltkontakt geschlossen ist, Hierdurch wird das Startrelais mit Strom beaufschlagt und der Motor gestartet. Der Controller registriert den Schaltzustand der elektrischen Lenkradverriegelung. Bei verriegeltem Lenkrad blockiert er den Zentralschalter, so dass insbesondere die Motorsteuerung bzw. das Startrelais abgeschaltet wird. Somit ist ein Losfahren des Kraftfahrzeuges bei blockierter Lenkradverriegelung ausgeschlossen. Die Lenkradverriegelung kann auch über den Controller gesteuert werden, der über die Signalleitung den Schaltzustand des Primärschalters des Zündschlosses überwacht.

In Automobilen werden zunehmend rein elektronische Zündstartschaltereinheiten ohne mechanisches Zündschlüssel-Zündschloss-System verwendet, insbesondere Systeme ohne aktive Schlüsselbetätigung, d.h. sogenannte "Keyless-go"-Systeme, bei denen eine Schliessanlage und eine elektronische Wegfahrsperre über drahtlose Kommunikation durch ein Authentikationselement, z.B. in Form einer Chipkarte, gesteuert werden, das hierzu vom Benutzer lediglich mitgeführt werden braucht, ohne dass es weiterer Handhabung desselben bedarf. Bei solchen Systemen beinhaltet die Zündstartschaltereinheit zum Ein- und Ausschalten der Zündung und zum Starten des Motors typischerweise keine mechanische Schlüssel-Schloss-Einheit, sondern entsprechende Tastschalter. Andererseits ist es auch für diese Systeme wünschenswert, verhindern zu können, dass sich eine vorhandene Lenkradverriegelungseinheit bei laufendem Fahrzeugmotor versehentlich nicht in ihrem verriegelnden Zustand befindet.

In der Patentschrift DE 197 41 438 C1 sind ein Verfahren und ein Steuersystem zum Stillsetzen eines Kraftfahrzeugs beschrieben, bei denen mit dem Ausschalten eines Zündanlassschalters der Kraftfahrzeug-Antriebsmotor abgeschaltet und die Fahrzeuggeschwindigkeit erfasst wird, woraufhin der zugehörige Geschwindigkeitssensor mindest noch so lange weiterbetrieben wird, bis er einen Stillstand des Fahrzeugs anzeigt. Eine vorhandene Lenkungsverriegelung wird erst dann aktiviert, wenn der Fahrzeugstillstand erkannt ist.

Der Erfindung liegt daher als technisches Problem die Bereitstellung einer Zündstartschalter- und Lenkradverriegelungsvorrichtung der eingangs genannten Art zugrunde, bei der mit relativ geringem Aufwand Massnahmen getroffen sind, die gewährleisten, dass sich die Lenkradverriegelungseinheit bei laufendem Fahrzeugmotor in ihrem entsichernden Zustand befindet.

Die Erfindung löst dieses Problem durch die Bereitstellung einer Zündstartschalter- und Lenkradverriegelungsvorrichtung mit den Merkmalen des Anspruchs 1. Bei dieser Vorrichtung sind die Lenkradvernegelungseinheit und die Zündstartschaltereinheit miteinander über Kopplungsmittel gekoppelt, die Zustandsabfrage- und Startblockiermittel umfassen, die den Verriegelungszustand der Lenkradverriegelungseinheit abfragen und ein Starten des Fahrzeugmotors nur freigeben, wenn sich die Lenkradverriegelungseinheit bei Laufendem Fahrzeugmotor in ihrem entsichernden Zustand befindet.

Die Erfindung löst dieses Problem durch die Bereitstellung einer Zündstartschalter- und Lenkradverriegelungsvorrichtung mit den Merkmalen des Anspruchs 1. Bei dieser Vorrichtung sind die Lenkradverriegelungseinheit und die Zündstartschaltereinheit miteinander über Kopplungsmittel gekoppelt, die Zustandsabfrage- und Startblockiermittel umfassen, die den Verriegelungszustand der Lenkradverriegelungseinheit abfragen und ein Starten des Fahrzeugmotors nur freigeben, wenn sich die Lenkradverriegelungseinheit in ihrem entriegelnden Zustand befindet. Damit sind die Zustandsabfrage- und Startblockiermittel in der Lage, beim Anfordern eines Motorstarts durch den Fahrzeugnutzer den Verriegeungszustand der Lenkradverriegelungseinheit abzufragen und daraufhin den angeforderten Motorstart nur dann auch tatsächlich zuzulassen, wenn sich die Lenkradverriegelungseinheit im entriegelnden Zustand befindet.

Dies gewährleistet, daß sich die Lenkradverriegelungseinheit nach erfolgreichem Motorstart und damit im laufenden Fahrbetrieb des Fahrzeugs in ihrem entriegelnden Zustand befindet, ohne daß sie zwangsläufig durch die Zündstartschaltereinheit vor dem Bewirken eines Motorstarts in diesen Zustand z.B. durch Unterbrechung einer Versorgungsleitung geschaltet werden müßte. Die Vorrichtung eignet sich daher nicht nur für traditionelle Fahrberechtigungssysteme mit mechanischem Zündschloß, sondern auch für die erwähnten "Keyless-go"-Systeme und andere Fahrberechtigungssysteme ohne mechanisches Zündschloß. Weiter ist von Vorteil, daß in einem Fehlerfall, in welchem zwar die Lenkradverriegelungseinheit einen Entriegelungsbefehl zur Einnahme ihres entriegelnden Zustands erhält, diesem Steuerbefehl jedoch aufgrund eines Systemfehlers nicht nachkommt, das Starten des Motors blockiert wird, da über die Zustandsabfrage das fehlerhafte Vorliegen des verriegelnden Zustands der Lenkradverriegelungseinheit erkannt wird.

Bei einer nach Anspruch 2 weitergebildeten Vorrichtung erfolgt die Abfrage des Zustands der Lenkradverriegelungseinheit durch eine Zündstart-Steuereinheit in der Zündstartschaltereinheit, wozu die Zündstart-Steuereinheit über eine entsprechende Abfrageleitung mit der Lenkradverriegelungseinheit verbunden ist, speziell mit einer Verriegelungs-Steuereinheit derselben, die eine zugehörige Stelleinheit zur Ver- und Entriegelung des Fahrzeuglenkelementes ansteuert. Die Zündstart-Steuereinheit ist demgemäß bei Anforderung eines Motorstarts durch den Fahrzeugnutzer in der Lage, den Startvorgang je nach Ergebnis der Abfrage des Zustands der Lenkradverriegelungseinheit tatsächlich zu bewirken oder aber zu unterlassen. Wenn die besagten Steuereinheiten ohnehin als Systemkomponenten verwendet werden, wird zur Realisierung dieser Vorrichtung darüber hinaus im wesentlichen nur die Abfrageleitung benötigt.

In weiterer Ausgestaltung ist gemäß Anspruch 3 eine Versorgungsleitung vorgesehen, über welche die Lenkradverriegelungseinheit mit zwei unterschiedlich hohen Leistungen versorgt werden kann. Ein erster, höherer Leistungswert ist so gewählt, daß er zur Versorgung sowohl der Verriegelungs-Steuereinheit als auch der von ihr angesteuerten Stelleinheit, z.B. einem Stellmotor, ausreicht. Der zweite, niedrigere Leistungswert ist so gewählt, daß er zwar für den Betrieb der Verriegelungs-Steuereinheit, jedoch nicht für den Betrieb der angeschlossenen Stelleinheit ausreicht. Wenn der zweite Leistungswert an der Lenkradverriegelungseinheit anliegt, ist ihre Verriegelungs-Steuereinheit folglich in Betrieb, so daß sie von der Zündstart-Steuereinheit nach dem Verriegelungszustand der Lenkradverriegelungseinheit abgefragt werden kann. Gleichzeitig ist die Verriegelungs-Stelleinheit mangels ausreichender Leistungszufuhr nicht in Betrieb, was bei Wahl der üblichen Systemauslegung bedeutet, daß sich die Lenkradverriegelungseinheit im entriegelnden Zustand befindet. Um die Lenkradverriegelungseinheit in ihren verriegelnden Zustand zu steuern, wird der höhere Leistungswert auf die Versorgungsleitung gegeben. Eine weitere Ausgestaltung gemäß Anspruch 4 hat den Vorteil, daß keine separate Abfrageleitung zwischen der Lenkradverriegelungseinheit und der Zündstartschaltereinheit benötigt wird, indem die Versorgungsleitung für die Lenkradverriegelungseinheit über die Zündstartschaltereinheit geführt ist und gleichzeitig als die Zustandsabfrageleitung fungiert.

Vorteilhafte Ausführungsformen der Erfindung sind in den Zeichnungen dargestellt und werden nachfolgend beschrieben. Hierbei zeigen:
- Fig. 1: ein Blockschaltbild einer elektronischen Zündstartschalter- und Lenkradverriegelungsvorrichtung mit einer Versorgungsleitung und einer separaten Abfrageleitung zwischen Lenkradverriegelungseinheit und Zündstartschaltereinheit und
- Fig. 2: ein Blockschaltbild einer elektronischen Zündstartschalter- und Lenkradverriegelungsvorrichtung mit kombinierter Versorgungs- und Abfrageleitung zwischen Lenkradverriegelungseinheit und Zündstartschaltereinheit.

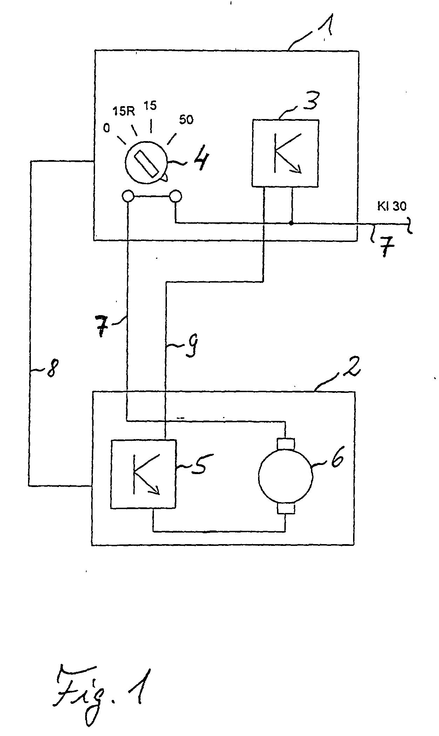

Die in Fig 1 schematisch als Blockschaltbild gezeigte elektronische Zündstartschalter- und Lenkradverriegelungsvorrichtung beinhaltet eine Zündstartschaltereinheit 1 und einer mit dieser gekoppelte Lenkradverriegelungseinheit 2. Die Zündstartschaltereinheit 1 umfaßt eine Zündstart-Steuereinheit 3, die von einnem Mikrocontroller gebildet ist, und ein mechanisches Zündschloß 4, das in herkömmlicher Weise nach Einstecken eines als berechtigt erkannten Schlüssels zwischen den vier eingangs erwähnten Zündschloßstellungen "0", "15R", "15" und "50" verdreht werden kann, wobei wie gesagt in der "0"-Stellung als Ausgangsstellung Zündung und Bordnetzversorgung abgestellt sind, in der "15R"-Stellung, der sogenannten "Radiostellung", die Zündung noch ausgeschaltet, das übrige Bordnetz hingegen eingeschaltet ist, in der "15"-Stellung die Zündung eingeschaltet ist und die "50"-Stellung vom Zündschloß temporär zum Starten des Motors eingenommen wird. Über die zugeführte standardisierte "Klemme 30"-Leitung 7 wird die Zündstartschaltereinheit 1, insbesondere deren Zündstart-Steuereinheit 3, über das Bordnetz des Fahrzeugs gespeist.

Die Lenkradverriegelungseinheit 2 umfaßt eine zugehörige Verriegelungs-Steuereinheit 5, die wiederum von einem Mikrocontroller gebildet ist, und einen von dieser angesteuerten Stellmotor 6 mit zugehörigem, nicht gezeigtem Stellglied, das vom Stellmotor 6 zwischen einer das Lenkrad oder ein äquivalentes Fahrzeuglenkelement blockierenden oder freigebenden Ver- bzw. Entriegelungsstellung bewegbar ist. Zur Leistungsversorgung ist die "Klemme 30"-Leitung 7 von der Zündstartschaltereinheit 1 über deren Zündschloß 4 zur Lenkradverriegelungseinheit 2 weitergeführt, dort speziell auch zum Stellmotor 6. Die Versorgungsleitung 7 wird vom Zündschloß 4 unabhängig von dessen Stellung nicht unterbrochen, so daß die Lenkradverriegelungseinheit 2 und speziell auch ihre Verriegelungs-Steuereinheit 5 in jeder Stellung des Zündschlosses 4 vom Bordnetz mit der benötigten Betriebsleistung versorgt wird. Eine Datenleitung 8 verbindet die Lenkradverriegelungseinheit 2 und die Zündstartschaltereinheit 1, z.B. in Form eines Fahrzeugdatenbuses, um Datenkommunikationsvorgänge mit diesen beiden Einheiten 1, 2 ausführen zu können.

Charakteristisch für das Ausführungsbeispiel von Fig. 1 ist das Vorhandensein einer separaten Abfrageleitung 9 zwischen der Zündstart-Steuereinheit 3 und der Verriegelungs-Steuereinheit 5. Über die Abfrageleitung 9 fragt die Zündstart-Steuereinheit 3 bei der Verriegelungs-Steuereinheit 5 den Zustand der Lenkradverriegelungseinheit 2 ab, d.h. ob sich diese in ihrem verriegelnden oder entriegelnden Zustand befindet. Die Abfrage des Verriegelungszustands der Lenkradverriegelungseinheit 2 erfolgt durch die Zündstart-Steuereinheit 3 insbesondere auf eine erkannte Motorstartanforderung hin, so daß sich insgesamt typischerweise folgender Funktionsablauf bei der Inbetriebnahme des Fahrzeugs ergibt.

Zunächst steckt der Fahrzeugnutzer einen berechtigenden Schlüssel in das in seiner Ausgangsstellung gezeigte Zündschloß 4 und dreht es dann sukzessive in die "15R"-Stellung zur Bordnetzaktivierung und die "15"-Stellung zum Einschalten der Zündung für den Fahrzeugmotor. Anschließend gibt er durch Weiterdrehen des Zündschlosses 4 in die "50"-Stellung eine Motorstartanforderung, die von der Zündstart-Steuereinheit erkannt wird. Spätestens zu diesem Zeitpunkt fragt diese den Verriegelungszustand der Lenkradverriegelungseinheit 2 bei deren Verriegelungs-Steuereinheit 5 über die Abfrageleitung 9 ab. Im fehlerfreien Betrieb hat die Verrieglungs-Steuereinheit 5 zuvor rechtzeitig eine Information darüber erhalten, daß ein Fahrzeuginbetriebnahmevorgang läuft und insbesondere die Motorzündung eingeschaltet und ggf. eine Motorstartanforderung ausgelöst wurde. Diese Information kann der Verriegelungs-Steuereinheit 5 z.B. von der Zündstartschaltereinheit 1 über die Datenleitung 8 zugeführt werden. Die Verriegelungs-Steuereinheit 5 hat dann dementsprechend den Stellmotor 5 in die entriegelnde Position gesteuert, die zur Inbetriebnahme des Fahrzeugs gewünscht wird. Im Fall einer Fehlfunktion der Lenkradverriegelungseinheit 2 ist allerdings nicht gewährleistet, daß sie in dieser Situation den gewünschten entriegelnden Zustand auch tatsächlich einnimmt. Andererseits sollte vermieden werden, daß sich die Lenkradverriegelungseinheit 2 bei gestartetem Fahrzeugmotor noch in ihrem verriegelnden Zustand befindet.

Dies wird dadurch gewährleistet, daß die Zündstart-Steuereinheit 3 bei vorliegender Motorstartanforderung anhand der entsprechenden Abfrage feststellt, ob die Lenkradverriegelungseinheit den gewünschten entriegelnden Zustand eingenommen hat. Wenn dies der Fall ist, gibt die Zündstart-Steuereinheit 3 den Start des Motors frei. Erkennt sie hingegen über die Abfrageleitung 9, daß sich die Lenkradverriegelungseinheit 2 noch im verriegelnden Zustand befindet, so unterbindet sie das angeforderte Starten des Fahrzeugmotors. Da somit das erfolgreiche Starten des Fahrzeugmotors an die abgefragte Bedingung gekoppelt ist, daß sich die Lenkradverriegelungseinheit 2 in ihrem entriegelnden Zustand befindet, wird sichergestellt, daß ein erfolgreicher Motorstart nur erfolgt, wenn die Lenkradverriegelungseinheit 2 diesen Zustand eingenommen hat.

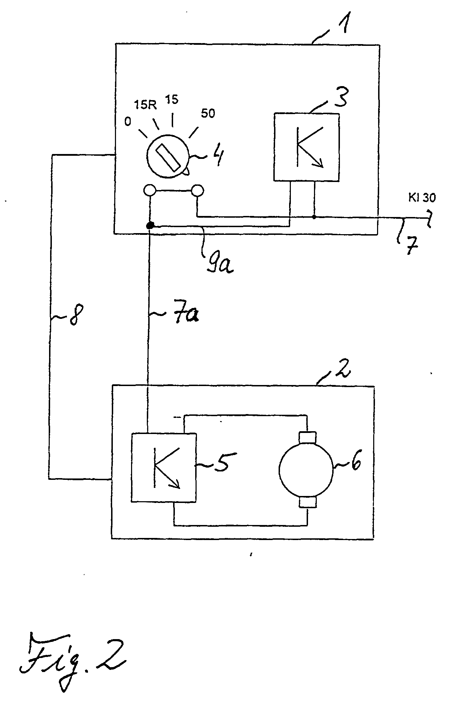

Fig. 2 zeigt schematisch eine weitere Zündstartschalter- und Lenkradverriegelungsvorrichtung als Variante derjenigen von Fig. 1, wobei funktionell entsprechende Elemente der Übersichtlichkeit halber mit denselben Bezugszeichen versehen sind und insoweit auf die obige Beschreibung zu Fig. 1 verwiesen werden kann. Insbesondere beinhaltet auch die Vorrichtung von Fig 2 die Zündstartschaltereinheit 1 mit zugehöriger Mikrocontroller-Steuereinheit 3 und mechanischem Zündschloß 4 sowie die Lenkradverriegelungseinheit 2 mit zugehöriger Steuereinheit 5 und von ihr angesteuertem Stellmotor 6. Des weiteren ist auch hier die Datenleitung 8 zwischen der Zündstartschaltereinheit 1 und der Lenkradverriegelungseinheit 2 vorgesehen.

Der charakteristische Unterschied der Vorrichtung von Fig. 2 gegenüber derjenigen von Fig. 1 besteht darin, daß Versorgungs- und Abfrageleitung zwischen der Zündstartschaltereinheit 1 und der Lenkradverriegelungseinheit 2 nicht separat, sondern in kombinierter Form vorgesehen sind, und das Zündschloß eine Strombegrenzungsfunktion für die Lenkradverriegelungseinheit ausübt. Dazu greift das Zündschloß 4 in diesem Beispiel aktiv in die ankommende "Klemme 30"-Leitung 7 ein, indem sie die auf dieser Leitung 7 liegende Bordnetzleistung stellungsabhängig nicht mehr in voller Höhe an die Lenkradverriegelungseinheit 2 weitergibt. Vom Zündschloß 4 ist zur Verriegelungs-Steuereinheit 5 eine kombinierte Versorgungs- und Abfrageleitung 7a geführt, an die innerhalb der Zündstartschaltereinheit 1 die Zündstart-Steuereinheit 3 über einen Abfrageleitungszweig 9a angeschlossen ist. In der Lenkradverriegelungseinheit 2 erfolgt in diesem Beispiel die Leistungsversorgung des Stellmotors 6 über die Verriegelungs-Steuereinheit 5.

Die Strombegrenzungsfunktion des Zündschlosses 4 ist so gewählt, daß dieses die volle Bordnetzleistung, die über die "Klemme 30"-Leitung 7 ankommt, nur so lange über die kombinierte Versorgungs- und Abfrageleitung 7a zur Lenkradverriegelungseinheit 2 durchläßt, wie sich seine Drehstellung in einem Winkelbereich mit ausgeschalteter Zündung befindet. Zu diesem Zweck kann z.B. ein zwischen der Ausgangsstellung und der Stellung "15" für das Einschalten der Zündung liegender Schwellwert-Winkel vorgesehen sein, bis zu dem das Zündschloß, 4 die volle Bordnetzleistung durchläßt, wenn es aus seiner Ausgangsstellung herausgedreht wird. Wenn es den Schwellwert-Winkel überschreitet oder wenn es jedenfalls die "15"-Stellung eingeschalteter Zündung erreicht hat, wird durch eine hierfür übliche, dem Fachmann als solches bekannte schaltungstechnische Maßnahme dafür gesorgt, daß das Zündschloß 4 eine Strombegrenzung für die Versorgungsleitung 7a bewirkt und auf diese Weise nur noch eine reduzierte Betriebsleistung für die Lenkradverriegelungseinheit 2 über die kombinierte Versorgungs- und Abfrageleitung 7a zuläßt. Diese reduzierte Leistung ist so gewählt, daß damit zwar noch die Verriegelungs-Steuereinheit 5 in Betrieb gehalten werden kann, sie aber nicht mehr ausreicht, den Stellmotor 6 zu aktivieren. Da somit die Verriegelungs-Steuereinheit 5 weiterhin betriebsfähig ist, kann sie von der Zündstart-Steuereinheit 3 erfolgreich nach dem Verriegelungszustand der Lenkradverriegelungseinheit 2 abgefragt werden, wozu ebenfalls die kombinierte Versorgungs- und Abfrageleitung 7a genutzt wird, auf welche die Zündstart-Steuereinheit 3 über den Abfrageleitungszweig 9a Zugriff hat.

Vorzugsweise ist die Lenkradverriegelungseinheit 2 wie üblich so ausgelegt, daß sie sich bei abgeschaltetem, deaktiviertem Stellmotor 6 in ihrem entriegelnden Zustand befindet. Indem das Zündschloß 4 bei Erreichen ihrer "15"-Stellung zum Einschalten der Zündung oder jedenfalls spätestens ihrer "50"-Stellung zum Anfordern eines Motorstarts die Betriebsleistung für die Lenkradverriegelungseinheit 2 so weit begrenzt, daß deren Stellmotor 6 deaktiviert bleibt, bewirkt dies im fehlerfreien Betriebsfall dann automatisch, daß die Lenkradverriegelungseinheit 2 wie gewünscht ihren entriegelnden Zustand annimmt. Selbst wenn letzteres aufgrund eines Fehlverhaltens nicht geschieht, erkennt dies die Zündstart-Steuereinheit 3 durch die Verriegelungszustandsabfrage und unterbindet einen angeforderten Motorstart.

Gegenüber dem Beispiel von Fig. 1 hat die Vorrichtung von Fig. 2 den Vorteil, daß neben der Datenleitung 8 nur eine weitere Verbindungsleitung in Form der kombinierten Versorgungs- und Abfrageleitung 7a zwischen Zündstartschaltereinheit 1 und Lenkradverriegelungseinheit 2 benötigt wird. Im übrigen ergeben sich für die Vorrichtung von Fig. 2 dieselben Funktionalitäten und Vorteile, wie sie oben für das Beispiel von Fig. 1 angegeben sind. Wenngleich sich die beiden gezeigten Beispiele auf Systeme mit mechanischem Zündschloß beziehen, ist aus der obigen Beschreibung ersichtlich, daß dies kein zwingender Bestandteil der erfindungsgemäßen Vorrichtung ist. Insbesondere eignet sich die erfindungsgemäße Vorrichtung auch für "Keyless-go"-Systeme, bei denen den verschiedenen erwähnten Funktionsstellungen des mechanischen Zündschlosses beispielsweise eine Mehrzahl von Tastern oder anderen Ein/Aus-Schaltelementen entspricht. Im Fall von Fig. 2 muß dann lediglich dafür gesorgt werden, daß die Strombegrenzungsmittel zur Reduzierung der Betriebsleistung für die Lenkradverriegelungseinheit dann aktiviert werden, wenn über das entsprechende Schaltelement die Zündung eingeschaltet bzw. ein Motorstart angefordert wird.

Durch die erfindungsgemäße Vorrichtung kann bei Fahrzeugen mit Automatikgetriebe zudem gewährleistet werden, daß in den Getriebestellungen "P" und "N" eine Motorstartmöglichkeit besteht, wozu erforderlich ist, daß die Lenkradverriegelungseinheit in Getriebestellung "N" noch mit Leistung versorgt wird. Dies läßt sich durch die erfindungsgemäße Vorrichtung erreichen, da hier die Verriegelungs-Steuereinheit 5 unabhängig von der von ihr angesteuerten Stelleinheit 6 mit Leistung versorgt und nach dem Verriegelungszustand der Lenkradverriegelungseinheit 2 abgefragt werden kann.

## Patentansprüche

1. Elektronische Zündstartschalter- und Lenkradverriegelungsvorrichtung für ein Kraftfahrzeug, mit
- einer Lenkradverriegelungseinheit (2) zur Ver- und Entriegelung eines Fahrzeugelementes,
- einer Zündstartschaltereinheit (1) mit einer ersten Schaltfunktion zum ein- und Ausschalten einer Fahrzeugmotorzündung und einer zweiten Schaltfunktion zum Starten des Fahrzeugmotors, und
- die Lenkradverriegelungseinheit ist mit der Zündstartschaltereinheit mit koppelnden Mitteln (3,5,7,8,9) , in Form von Daten- und Leistungsversorgungsleitungen Verbunden, die bewirken, dass sich beim über die Zündstartschaltereinheit ausgelösten Starten des Fahrzeugmotors die Lenkradverriegelungseinheit in ihrem entriegelnden Zustand befindet,
- die Kopplungsmittel Zustandsabfrage- und Startblockiermittel (3,9) umfassen, die den Verriegelungszustand der Lenkradverriegelungseinheit (2) abfragen und ein Starten des Fahrzeugmotors nur freigeben, wenn sich die Lenkradverriegelungseinheit in ihrem entriegelnden Zustand befindet,
**dadurch gekennzeichnet, dass**
- die Lenkradverriegelungseinheit eine Verriegelungs-Steuereinheit (5) und eine von dieser angesteuerte Stelleinheit (6) aufweist und
- die Zustandsabfrage- und Startblockiermittel eine in der Zündstartschaltereinheit (1) angeordnete Zündstart-Steuereinheit (3) beinhalten, die mit der Verriegelungs-Steuereinheit über eine Abfrageleitung (9) zur Abfrage des Verriegelungszustands der Lenkradverriegelungseinheit verbunden ist und einen angeforderten Motorstart nur bewirkt, wenn sich die Lenkradverriegelungseinheit in ihrem entriegelnden Zustand befindet.

2. Elektronische Zündstartschalter- und Lenkradverriegelungsvorrichtung nach Anspruch 1 , **dadurch gekennzeichnet, dass**
eine Versorgungsleitung (7a) zur Leistungsversorgung der Lenkradverriegelungseinheit (2) mit einer ersten, zur Speisung sowohl der Verriegelungs-Steuereinheit (5) als auch der zugehörigen Stelleinheit (6) ausreichenden Betriebsleistung, wenn sich die Zündstartschaltereinheit (1) im Zustand ausgeschalteter Zündung befindet, und mit einer zweiten, zur Speisung der Verriegelungs-Steuereinheit (5), aber nicht der zugehörigen Stelleinheit (6) ausreichenden Betriebsleistung, wenn sich die Zündstartschaltereinheit im Zustand eingeschalteter Zündung befindet.

3. Elektronische Zündstartschalter- und Lenkradverriegelungsvorrichtung nach Anspruch 2, **dadurch gekennzeichnet, dass**
die Versorgungsleitung (7a) über die Zündstartschaltereinheit (1) geführt ist und gleichzeitig auch die Abfrageleitung bildet, über welche die Zündstart-Steuereinheit (3) den Verriegelungszustand der Lenkradverriegelungseinheit (2) abfragt.

## Claims

1. Electronic ignition starter switch and steering wheel locking apparatus for a motor vehicle, having
- a steering wheel locking unit (2) for locking and unlocking a vehicle element,
- an ignition starter switch unit (1) having a first switching function for switching vehicle engine ignition on and off, and having a second switching function for starting the vehicle engine, and
- the steering wheel locking unit is connected to the ignition starter switch unit by coupling means (3, 5, 7, 8, 9), in the form of data and power supply lines, which means result in the steering wheel locking unit being in its unlocked state during starting of the vehicle engine initiated via the ignition starter switch unit,
- the coupling means comprise state interrogation and starting blocking means (3, 9), which interrogate the locked state of the steering wheel locking unit (2) and allow the vehicle engine to be started only when the steering wheel locking unit is in its unlocked state,
**characterized in that**
- the steering wheel locking unit has a locking control unit (5) and an actuating unit (6) which is driven by it, and
- the state interrogation and starting blocking means contain an ignition starter control unit (3) which is arranged in the ignition starter switch unit (1) and is connected to the locking control unit via an interrogation line (9) for interrogating the locking state of the steering wheel locking unit and results in the demanded engine start only when the steering wheel locking unit is in its unlocked state.

2. Electronic ignition starter switch and steering wheel locking apparatus according to Claim 1,
**characterized in that**
a supply line (7a) for supplying power to the steering wheel locking unit (2) having a first operating power level which is sufficient to supply both the locking control unit (5) and the associated actuating unit (6), when the ignition starter switch unit (1) is in the state with the ignition switched off, and having a second operating power level, which is sufficient to supply the locking control unit (5) but not the associated actuating unit (6), when the ignition starter switch unit is in the state with the ignition switched on.

3. Electronic ignition starter switch and steering wheel locking apparatus according to Claim 2,
**characterized in that**
the supply line (7a) is routed via the ignition starter switch unit (1) and at the same time also forms the interrogation line via which the ignition starter control unit (3) interrogates the locking state of the steering wheel locking unit (2).

## Revendications

1. Dispositif électronique de commutateur d'allumage et de verrouillage de la direction pour un véhicule automobile, comprenant :
- une unité de verrouillage du volant de direction (2) pour le verrouillage et le déverrouillage d'un élément du véhicule,
- une unité de commutateur d'allumage (1) avec une première fonction de commutation pour le lancement et l'arrêt d'un allumage du moteur du véhicule et une deuxième fonction de commutation pour le démarrage du moteur du véhicule et
- l'unité de verrouillage du volant de direction étant connectée à l'unité de commutateur d'allumage par des moyens d'accouplement (3, 5, 7, 8, 9) en forme de lignes de données et de puissance qui font en sorte que lors du démarrage du moteur du véhicule, déclencher par le biais de l'unité de commutation d'allumage, l'unité de verrouillage du volant de direction se trouve dans son état déverrouillé,
- les moyens d'accouplement comprenant des moyens de demande d'état et de blocage de démarrage (3, 9) qui demandent l'état de verrouillage de l'unité de verrouillage du volant de direction (2) et qui n'autorisent un démarrage du moteur du véhicule que lorsque l'unité de verrouillage du volant de direction se trouve dans son état déverrouillé,
**caractérisé en ce que**
- l'unité de verrouillage du volant de direction présente une unité de commande de verrouillage (5) et une unité de réglage (6) commandée par celle-ci, et
- les moyens de demande d'état et de blocage du démarrage contiennent une unité de commande d'allumage (3) disposée dans l'unité de commutateur d'allumage (1), qui est connectée à l'unité de commande de verrouillage par une ligne de demande (9) pour demander l'état de verrouillage de l'unité de verrouillage du volant de direction et provoque un démarrage demandé seulement lorsque l'unité de verrouillage du volant de direction se trouve dans son état déverrouillé.

2. Dispositif électronique de commutateur d'allumage et de verrouillage de la direction selon la revendication 1, **caractérisé en ce**
**qu'**une ligne d'alimentation (7a) pour l'alimentation en puissance de l'unité de verrouillage du volant de direction (2) est alimentée en une première puissance de service suffisante pour alimenter à la fois l'unité de commande de verrouillage (5) et l'unité de réglage associée (5), lorsque l'unité de commutateur d'allumage (1) se trouve dans un état d'allumage coupé, et en une deuxième puissance de service suffisante pour l'alimentation de l'unité de commande de verrouillage (5) mais pas de l'unité de réglage associée (6), lorsque l'unité de commutateur d'allumage se trouve dans un état d'allumage enclenché.

3. Dispositif électronique de commutateur d'allumage et de verrouillage de la direction selon la revendication 2, **caractérisé en ce que**
la ligne d'alimentation (7a) est guidée par le biais de l'unité de commutateur d'allumage (1) et forme en même temps également la ligne de demande par le biais de laquelle l'unité de commande d'allumage (3) demande l'état de verrouillage de l'unité de verrouillage du volant de direction (2).
